# FASCICULE DE BREVET EUROPEEN

(11) **EP 0 511 089 B1**
(45) Date de publication et mention de la délivrance du brevet: **24.07.1996**
(21) Numéro de dépôt: 92401131.5
(22) Date de dépôt: 22.04.1992
(51) Int. Cl.: B60N 3/14, F23Q 7/00

(54) **Allume-cigares, notamment pour vehicules automobiles**
Zigarrenanzünder, insbesondere für Kraftfahrzeuge
Cigar lighter, especially for motor vehicles

(30) Priorité: 23.04.1991 FR 9104973; 13.05.1991 FR 9105744; 16.01.1992 EP 92400113; 16.02.1992 EP 92400114
(43) Date de publication de la demande: 28.10.1992
(73) Titulaire: VALEO VISION, 93012 Bobigny Cédex (FR)
(72) Inventeur: Mallet, Christian, F-91490 Milly-La-Forêt (FR); Lagier, Daniel, F-92000 Nanterre (FR); Wurtzbacher, Michel, F-75017 Paris (FR); Lesne, Serge, F-77176 Savigny-Le-Temple (FR)
(74) Mandataire: Gamonal, Didier

(56) Documents cités:
- EP-A- 0 200 247
- DE-C- 3 932 602
- FR-A- 2 444 587
- GB-A- 2 016 126
- GB-A- 2 099 122
- PATENT ABSTRACTS OF JAPAN vol. 8, no. 57 (M-283)(1494) 15 Mars 1984 & JP-A-58 208 515 (TOUKAI RIKA DENKI) 5 Décembre 1983
- PATENT ABSTRACTS OF JAPAN vol. 9, no. 333 (M-443)(2056) 27 Décembre 1985 & JP-A-60 165 423 (TOSHIBA) 28 Août 1985

## Description

La présente invention concerne un allume-cigares, notamment pour véhicule automobile du genre comportant, d'une part, une fiche de courant, et d'autre part, pour réception de ladite fiche de courant, un corps creux d'allumage, formant prise de courant, pourvu d'une pièce élastique de contact électrique et de languettes d'alimentation électriques.

Cette fiche peut consister en une prise de courant pour alimenter notamment un accessoire, tel qu'une lampe d'éclairage, ou en variante en un bouchon de chauffage recevant un corps de chauffage pour allumage d'un cigare ou d'une cigarette.

Jusqu'à présent, la prise de courant et le bouchon n'étaient pas à l'image l'un de l'autre. En effet, un bouchon comporte usuellement une partie fixe et une partie mobile à l'encontre d'un ressort de rappel, ladite partie mobile portant une coupelle d'extrémité pour, après déplacement de ladite coupelle, en position de chauffage, coopération avec ladite pièce élastique sous forme d'un bilame, dont les lames s'incurvent vers l'extérieur au fur et à mesure que celui-ci s'échauffe, jusqu'à désenclenchement de la coupelle sous l'action du ressort de rappel porté par le bouchon.

Dans une prise de courant par contre il n'y a pas de partie mobile manoeuvrable par l'usager, la prise prenant appui, pour son alimentation, sur l'organe de fixation du bilame. Usuellement, des moyens de retenue interviennent entre ledit corps d'allumage et la fiche pour maintien de celle-ci en position inactive, lesdits moyens étant portés en partie par une pièce de guidage appartenant à ladite fiche et en partie par ledit corps.

On a déjà proposé dans la demande FR 91 00501 déposée le 19 janvier 1991 et non publiée à ce jour, une disposition avec un dispositif de protection contre les surchauffes, inséré dans le circuit d'alimentation de l'allume-cigares, sous forme d'un disjoncteur thermique réarmable ayant un coefficient de température positif permanent, avec une résistance augmentant avec la température.

Il en est de même dans le document DE-C-3 932 602 conforme au préambule de la revendication 1.

On peut utiliser, comme disjoncteur, un composant à base de polymère semi-conducteur vendu par la société "RAYCHEM" sous la marque "PolySwitch". Grâce à cela, en cas de surchauffes, par exemple, lorsque la coupelle reste coincée dans le bilame, le disjoncteur thermique passe très rapidement d'une très basse résistance à une résistance élevée, lorsque consécutivement à une surintensité ou une surchauffe sa température dépasse un certain seuil.

Lorsque la surintensité ou la température sont substantiellement réduites ou éliminées, le composant se refroidit et retrouve, après extraction de la fiche, sa faible résistance.

L'allume-cigares revient donc opérationnel, sans qu'il soit nécessaire de remplacer un quelconque composant, notamment des fusibles de protection associés à l'allume-cigares.

La Demanderesse s'est demandée s'il n'était pas possible de tirer un nouveau parti de ce disjoncteur thermique, pour simplifier le bouchon en vue de rendre celui-ci semblable à une prise de courant c'est-à-dire dépourvu de partie mobile.

Pour cela on peut songer à faire appel à une disposition du type de celle décrite dans le document GB-A-2 099 122 avec un bouchon doté de pièces statiques.

Néanmoins, cette disposition fait appel à un circuit électronique de contrôle monté au sein du bouchon et nécessite de modifier le corps d'allumage dépourvu de pièce élastique de contact, le bouchon présentant des pattes élastiques pour assurer un bon contact électrique avec une section cylindrique du corps d'allumage.

Il en résulte que le bouchon n'est pas simplifié de manière la plus simple possible et que le corps d'alumage a une structure différente en étant dépourvu de pièce élastique électrique de contact. En outre, ce corps d'allumage n'est pas entièrement en matériau électriquement conducteur car il présente deux sections cylindriques électriquement conductrices et séparées par une partie isolante.

La présente invention a pour but de satisfaire ce souhait tout en simplifiant encore plus le bouchon et en conservant un corps d'allumage électriquement conducteur et à pièce élastique de contact électrique.

Suivant l'invention, un allume-cigares du type sus-indiqué est caactérisé en ce que lesdits moyens de retenue sont conformés pour retenir en position active la fiche de courant, et en ce que ladite fiche de courant est dépourvue de partie mobile l'une par rapport à l'autre, ledit disjoncteur thermique réarmable coupant l'alimentation de la fiche de courant lorsque celle-ci comporte une résistance chauffante qui atteint la température désirée.

Ainsi, grâce à l'invention, la prise de courant et le bouchon sont à l'image l'un de l'autre, et on est sûr par exemple que le bouchon de chauffage et le corps d'allumage ne chaufferont pas outre mesure, compte tenu du disjoncteur thermique réarmable, qui a ainsi une deuxième fonction, ledit disjoncteur coupant l'alimentation de la résistance chauffante du bouchon, lorsque celle-ci atteint la température désirée.

En outre le bouchon ne comporte que des pièces statiques, ce qui simplifie celui-ci, augmente sa fiabilité et sa robustesse, tout en simplifiant les problèmes de réglage et en diminuant l'encombrement axial de l'allume-cigares.

De plus, grâce notamment à la conformation des moyens de retenue et à la position statique de la résistance chauffante par rapport à la pièce de guidage, les côtés à respecter pour que le bouchon puisse coopérer avec la pièce élastique sont aisément réalisables. Il en est de même en ce qui concerne la prise de courant.

Tout ceci ouvre la voie à un grand nombre de développement. Ainsi, suivant une caractéristique, le corps d'allumage est dépourvu de bilame, sa pièce élastique de contact électrique servant uniquement de pièce de contact au bénéfice du coût de fabrication et des problèmes de réglage, les lames de ladite pièce n'ayant plus à s'incurver.

Suivant une autre caractéristique, les moyens de retenue comportent des languettes d'accrochage appartenant à l'un des éléments corps d'allumage - fiche de courant et deux gorges échelonnées axialement appartenant à l'autre desdits éléments fiche de courant - corps d'allumage.

Avantageusement les gorges sont formées dans la fiche de courant et les languettes dans le corps d'allumage, de manière connue en soi, mais lesdites languettes sont alors dirigées vers l'extrémité ouverte du corps d'allumage au bénéfice d'une réduction de l'encombrement axial de l'allume-cigares.

Avantageusement, les gorges sont formées dans la pièce de guidage du bouchon et celle-ci entoure en partie une pièce creuse de prise de courant fixée à isolation électrique à ladite pièce de guidage.

Avantageusement cette pièce fait saillie axialement par rapport à ladite pièce de guidage. Ainsi dans le cas d'une fiche de courant sous la forme d'un bouchon, cette pièce forme pare-cendres.

On appréciera dans tous les cas que cette configuration permet une standardisation bouchon - prise de courant, les mêmes pièces étant utilisées dans les deux cas.

Grâce au disjoncteur thermique et en utilisant ses propriétés de résistance électrique, on peut insérer celui-ci dans un circuit électrique comportant des moyens d'avertissement avec au moins une lampe d'éclairage pour la fiche et faire varier l'éclairage de celle-ci pour avertir l'usager par exemple lorsque le bouchon est chaud.

Les moyens d'avertissement peuvent comporter également une sonnette mise en action lorsque le disjoncteur sautera, ou un autre dispositif sonore tel que buzzer ou une sirène.

Avantageusement, les moyens d'avertissement sont montés en parallèle par rapport au disjoncteur thermique pour faire sentir pleinement leurs effets en fin de chauffage du bouchon.

La description qui va suivre illustre l'invention en référence aux dessins annexés dans lesquels:
- la figure 1 est une vue en coupe axiale d'un allume-cigares selon l'invention avec en partie gauche le bouchon en position inactive et dans en partie gauche le bouchon en position active;
- la figure 2 est une vue de dessus du bouchon de la figure 1;
- la figure 3 est une vue schématique du circuit électrique d'alimentation de l'allume-cigares selon l'invention;
- la figure 4 est une vue partielle montrant une partie des moyens de montage du bouton du bouchon à la pièce de guidage selon l'invention;
- les figures 5 à 7 sont des vues analogues aux figures 1 à 3, pour un second exemple de réalisation selon l'invention, le bouchon étant en position inactive dans la figure 5;
- la figure 8 est une vue analogue à la figure 5, pour ce second exemple de réalisation, le bouchon n'étant pas coupé et étant représenté en positions active et inactive;
- la figure 9 est une vue de dessous de la figure 8 montrant la partie connectrice de l'allume-cigares;
- la figure 10 est une vue de dessus selon la figure 8 montrant la conformation de la planche de bord du véhicule;
- la figure 11 est une vue analogue à la figure 5 avec une rotation de 90° par rapport à celle-ci;
- la figure 12 est une vue de dessus selon la figure 11;
- la figure 13 est une vue de dessous montrant la partie connectrice d'un corps d'allumage pour un troisième exemple de réalisation;
- la figure 14 est une vue en coupe du corps d'allumage pour ce troisième exemple de réalisation;
- la figure 15 est une vue en coupe montrant une prise de courant selon l'invention;
- la figure 16 est une vue de dessus selon la figure 15, la partie supérieure de la prise étant otée;
- la figure 17 représente la courbe caractéritisque du disjoncteur thermique, avec en ordonnée la valeur de la résistance, et en abscisse la température;
- la figure 18 est une vue en coupe axiale d'un allume cigare pour un quatrième exemple de réalisation;
- la figure 19 est une vue de dessous selon la figure 18 sans le corps d'allumage;
- la figure 20 est une vue de dessus selon la figure 18 sans le corps d'allumage;
- la figure 21 est une vue en coupe axiale analogue à la figure 18, avec représentation de l'excroissance;
- la figure 22 est une vue de dessus selon la figure 18 montrant les trous pratiqués dans la paroi du véhicule;
- la figure 23 est un schéma électrique des figures 18 à 22.

Dans les figures est illustré un allume-cigares pour véhicule automobile comportant, d'une part, une fiche de courant 10,100,200 et, d'autre part, pour réception de ladite fiche, un corps creux d'allumage 30,300,310, formant prise de courant, pourvu d'une pièce élastique de contact électrique 37, de languettes d'alimentation électriques 1,2,3.

Des moyens de retenue 20 interviennent entre ledit corps et ladite fiche, pour maintien de celle-ci en position inactive, lesdits moyens 20 étant portés en partie par une pièce de guidage 13 appartenant à ladite fiche, et en partie par ledit corps d'allumage.

Dans le circuit électrique de cet allume-cigares, est inséré un disjoncteur thermique réarmable 34, par exemple à base de polymère semi-conducteur, ayant un coefficient de température positif permanent avec une résistance augmentant avec la température.

En variante, le disjoncteur 34 a coefficient de température positif peut être en céramique à base de titanate de baryum.

Suivant l'invention, les moyens de retenue 20 sont conformés pour retenir en position active la fiche de courant 10,100,200, et ladite fiche 10,100,200 est dépourvue de partie mobile l'une par rapport à l'autre, ledit disjoncteur thermique réarmable 34 coupant l'alimentation de la fiche de courant 10,100,200 lorsque celle-ci comporte une résistance chauffante qui atteint la température désirée.

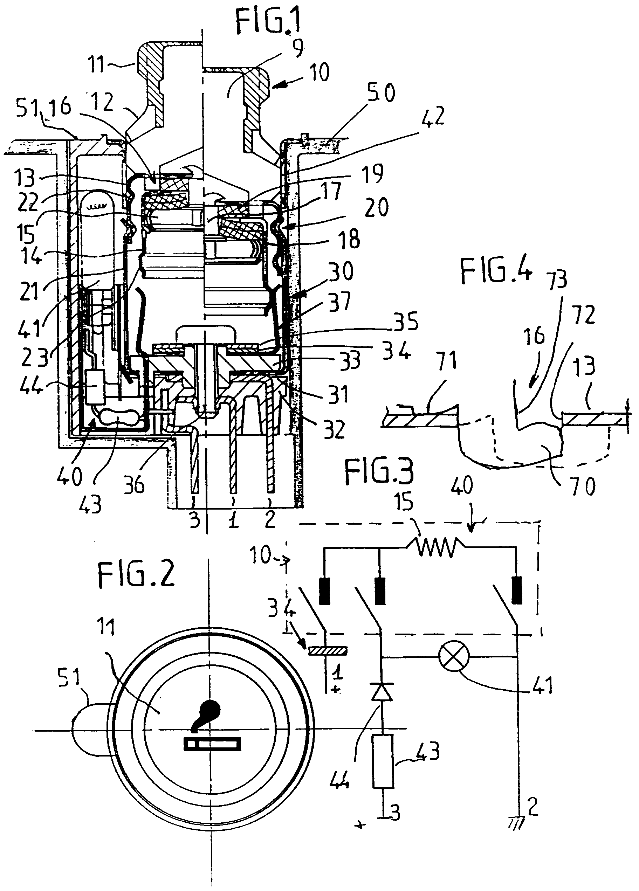

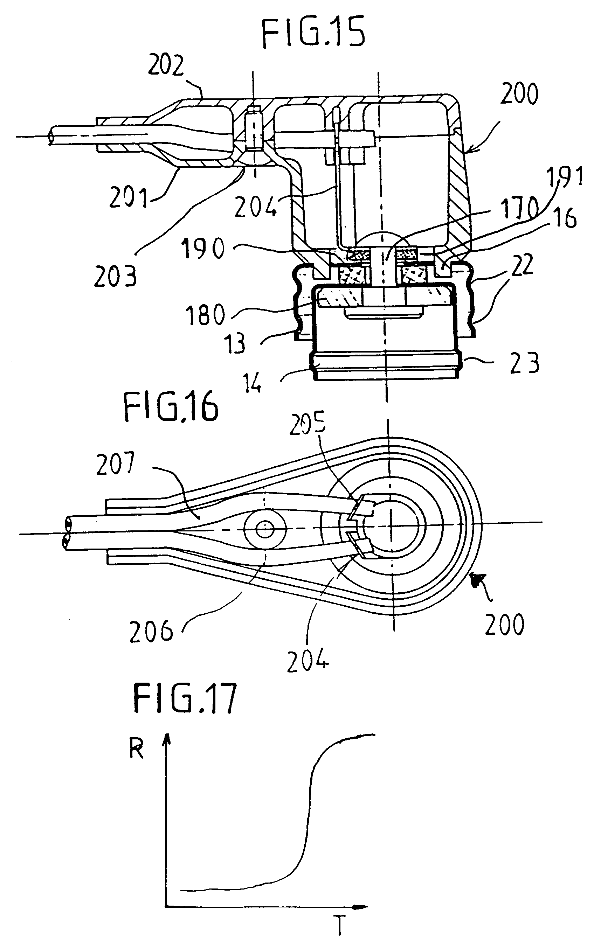

Dans les figures 1 à 14 et 18 à 23, la fiche est un bouchon d'allumage 10,100, tandis que dans les figures 15 et 16 ladite fiche consiste en une prise de courant.

Grâce à l'invention, de manière décrite ci-après, ledit bouchon et ladite prise comportent des éléments standards, et dans la description qui va suivre, l'expression "position active" signifie que le circuit électrique de l'allume-cigares est établi, ladite prise ou ledit bouchon étant alimentés électriquement, tandis que l'expression "position inactive" signifie que ledit bouchon et ladite prise ne sont pas alimentés électriquement. Ainsi, en position active, la fiche de courant est admise à coopérer avec la pièce de contact 37, pour fermeture du circuit électrique de l'allume-cigares, tandis qu'en position inactive ladite fiche est à distance de ladite pièce 37, le circuit électrique étant alors ouvert.

Pour ce faire, la fiche présente une pièce de prise de courant 14 propre à coopérer avec la pièce élastique 37. Cette pièce 14, ici sous forme de cuvette 14, est solidaire de manière statique de la pièce de guidage 13.

Plus précisément dans les figures 1 à 4, l'allume-cigares comporte, d'une part, un bouchon amovible 10,formant une fiche de courant, pourvu d'une cuvette d'extrémité 14 recevant un corps ou résistance électrique de chauffage 15 destiné à allumer une cigarette ou un cigare, et, d'autre part, un corps d'allumage creux 30,formant prise de courant, pourvu d'une pièce élastique de contact électrique 37 et de languettes d'alimentation électriques 1 à 3. Le corps 30 est en matériau électriquement conducteur, ici en tôle, et est obtenu par emboutissage.

Le bouchon 10 se loge à coulissement à l'intérieur du corps 30 et est propre à occuper une position active (allume-cigares branché), une position inactive (allume-cigares débranché) et à être extrait. Pour ce faire, le bouchon 10 présente un bouton de préhension 11,9,12 accessible à l'usager.

Dans les positions active et inactive, le bouchon 10 est enfoncé dans le corps 30, et est retenu dans ces positions par des languettes d'accrochage 21 d'orientation axiale, dotées chacune à leur extrémité libre d'un crochet de retenue en forme de V, issues du corps d'allumage 30 et par des gorges 22 échelonnées axialement pratiquées dans la pièce de guidage 13, que présente le bouchon 10. Ici deux languettes 21 diamétralement opposées sont prévues.

Le bouchon 10 comporte outre la cuvette 14, des rondelles d'isolation électriques 19,18, un rivet de fixation 17, la résistance 15, un chapeau 11 en matière plastique, tel que du polyamide noir, en matière non translucide, une partie 9 en matière translucide, tel que du polycarbonate de couleur cristal, et une bague éclairante 12 en matière translucide, tel que du polycarbonate de couleur rouge, des moyens d'assemblage 16 étant prévus entre la partie 9 et la pièce 13.

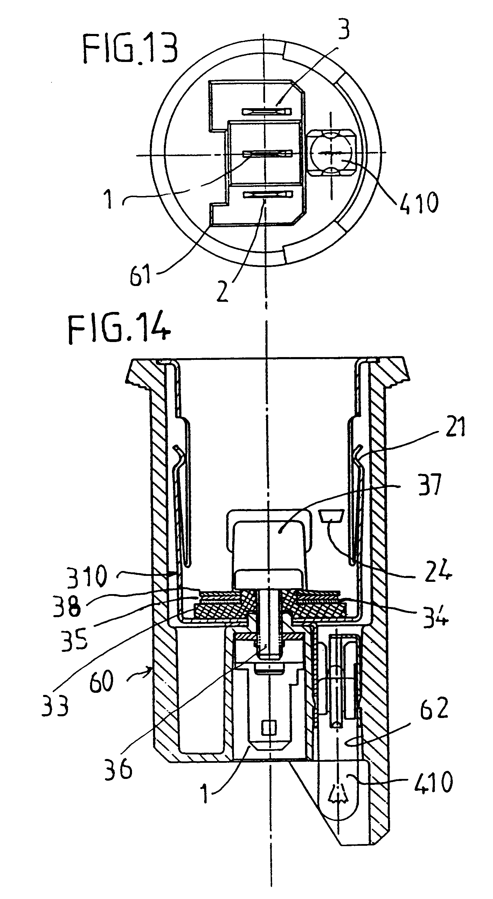

Le corps d'allumage 30 est creux en étant de forme cylindrique, pour réception du bouchon 10 de forme cylindrique complémentaire. Ce corps 30 présente un fond 31 et une extrémité ouverte avec une collerette d'extrémité. Ce corps présente également deux trous 24 (figure 11) pour coopération avec des crochets élastiques issus de la planche de bord 50 du véhicule ou d'une paroi de celui-ci, tel qu'une console.

Cette planche de bord 50 est creusée pour réception du corps d'allumage 30 et présente une paroi avec une base formant partie connectrice. Cette paroi présente également une excroissance pour logement d'une excroissance 51 de logement d'une lampe d'éclairage 41 solidaire du corps 30.

Ce corps 30 présente également une jupe cylindrique dans laquelle sont découpées les languettes 21 dirigées vers l'extrémité ouverte dudit corps électriquement conducteur. Le fond 31 porte à isolation électrique, par l'intermédiaire d'une première pièce électriquement isolante 32 et d'une seconde pièce électriquement isolante 33, la pièce de contact 37, formant pièce d'accrochage.

Le fond 31 porte des languettes d'alimentation électriques 1,2,3 s'étendant globalement axialement à l'extérieur du corps 30 en étant ici globalement en forme d'équerre avec chacune une base parallèle au fond 31.

La pièce 37 est en matériau électriquement conducteur et est montée à l'intérieur du corps 30 sur la pièce 33 dotée pour ce faire à son extrémité libre d'une collerette de centrage. La pièce 37, ici métallique, est en forme de U avec deux lames axiales, ici légèrement inclinées, globalement diamétralement opposées pourvues chacune d'un bec d'extrémité, pour contact ponctuel par pincement avec la cuvette 14 du bouchon 10. Les lames de la pièce 37 s'étendent dans le même sens que les languettes 21.

Le fond de la pièce 33 est creusé pour logement de la base de la pièce 37 et immobilisation en rotation de celle-ci par coopération de formes.

Un organe de fixation 36, ici une vis électriquement conductrice ou en variante un rivet, s'appuie par sa tête sur une rondelle d'application 35 conductrice. Cet organe 36 traverse la pièce 33, le fond 31, la pièce 32, qui sont tous troués à cet effet, et est fixé par vissage à la base de la languette 1 dotée d'un trou fileté à cet effet.

La pièce 32 est creusée pour immobilisation par coopération de formes de la base de la languette 1. Elle présente des cheminées pour montage des autres languettes 2,3, ladite languette 3 ayant une forme sinueuse.

La pièce 33 présente un téton traversant le fond 31 et servant de centreur à la base de la languette 2 au contact du fond 31. Les pièces 32 et 33 sont immobilisées l'une par rapport à l'autre par coopération de formes.

Ainsi la vis 36 sert de fixation aux susmentionnées pièces, avec blocage en rotation de celle-ci par coopération de formes. La pièce 33 présente également une autre collerette de centrage pour montage isolant des pièces 34,35.

On notera que les languettes 21 axiales ont une extrémité libre qui s'étend au-dessus de la pièce 37, la languette 2 étant connectée à la borne négative du véhicule (la masse de celui-ci) ainsi que le corps 30, tandis que les languettes 1,3 sont reliées à la borne positive de la batterie.

Ici, la languette 1 est connectée à l'alimentation de l'antivol, tandis que la languette 3 est connectée aux lanternes du véhicule.

Les parties 9,11,12 du bouton du bouchon 10 sont attelées de manière statique à la pièce de guidage 13. Cette pièce 13 consiste ici en une cuvette creuse avec une jupe annulaire propre à coopérer avec la jupe du corps 30, la jupe de la cuvette 13 présentant deux gorges échelonnées axialement 22.

La cuvette de guidage 13 entoure la cuvette d'alimentation électrique 14, lesdites cuvettes étant de forme cylindrique en étant isolée électriquement par la rondelle 19 interposée entre celles-ci. La cuvette 14 présente une zone cylindrique de contact 23 à son extrémité libre et fait saillie axialement par rapport à l'extrémité libre de la cuvette 13. Ainsi, les tolérances de fabrication n'ont pas à être précisées.

On appréciera que les cuvettes 13,14 de forme annulaire sont robustes. Elles sont en matériau électriquement conducteur, ici en tôle, en étant obtenues par emboutissage.

La partie opaque 11 est creuse et sert de logement à la partie 9 translucide avec assemblage desdites pièces par clipsage. Le fond de la pièce 11 est doté d'une fenêtre d'éclairage avec un sigle d'allume-cigares (figure 2) pour éclairage de celui-ci, grâce au corps 9.

La partie 12, sous forme d'une bague, est fixée également par clipsage à la partie 11 (à l'extrémité libre de celui-ci) et forme une collerette. La partie 9 est assemblée en final à la cuvette 13 par un montage 16 du type baïonnette. Ainsi les cuvettes 13 et 14 peuvent être fixées l'une par rapport à l'autre par avance.

Pour cela le fond de la cuvette 13 présente trois ouvertures 72 oblongues et la pièce 9 trois pattes 73 à ailes latérales bombées 70 et talon de retenue 71. Ainsi le montage se fait par enfilage des pattes 73 et ailes 70 à travers les ouvertures 72 dimensionnées à cet effet, puis par rotation, l'aile 70 prenant appui sur la face du fond de la coupelle 13 tournée vers l'extérieur, tandis que le talon 71 descend dans le trou 72.

Il y a ainsi immobilisation axiale et en rotation du corps 9 par rapport à la cuvette 13, avec une bonne tenue de la liaison en température. En variante, on peut prévoir une fixation par collage, vissage ou analogue.

La cuvette 14 présente un fond percé pour passage de l'organe de fixation 17. Autour de l'organe 17 sont montées des rondelles isolantes 18,19, la rondelle 19 étant en contact avec le fond de la coupelle 13.

Le corps de chauffage 15 consiste en une résistance électrique avec un fil enroulé en spirale. L'extrémité intérieure de la spirale est logée dans une fente diamétrale prévue à l'extrémité de l'organe 17 afin d'assurer sa fixation et sa liaison électrique avec la cuvette 13 par l'intermédiaire de l'organe 17.

En variante, on peut utiliser un corps de chauffage sous forme d'un corps en céramique conductrice électronique.

Les rondelles 18 sont cintrées et coopèrent avec un épaulement de l'organe 17. L'une des rondelles 18 est au contact de la cuvette 14, la rondelle 19 étant interposée entre les cuvettes 13 et 14. La fixation s'effectue de manière connue en soi par sertissage de l'organe 17 au contact du fond de la cuvette 13 après traversée de celui-ci. L'organe 17 permet donc un assemblage des cuvettes 13,14.

On notera que la jupe de la cuvette 14 comporte également des languettes 26 (figure 11) et une rondelle métallique 27 pour maintien de la résistance 15.

Le circuit électrique 40 d'alimentation de l'allume-cigares comporte une résistance 43 et une diode 44, ainsi qu'une lampe d'éclairage 41. Ce circuit 40 (figure 3) comporte également le disjoncteur thermique réarmable 34, ici à base de polymère semi-conducteur, ayant un coefficient de température positif permanent avec une résistance augmentant avec la température.

Il peut s'agir d'un composant vendu sous la marque "PolySwitch". Pour plus de précisions, on se reportera à la susmentionnée demande FR 91 00501, dont le contenu est considéré comme annexé à la présente invention.

Ici ce "polySwitch" est centré par la pièce 33, plus précisément par le nez ou collerette de centrage de ladite rondelle et est au contact, d'une part, avec la pièce 37, et d'autre part avec la rondelle d'application 35 elle-même au contact de la tête de la vis 36.

La lampe 41, la résistance 43, la diode 44 et les connexions électriques sont logées dans l'excroissance 51 solidaire du corps 30.

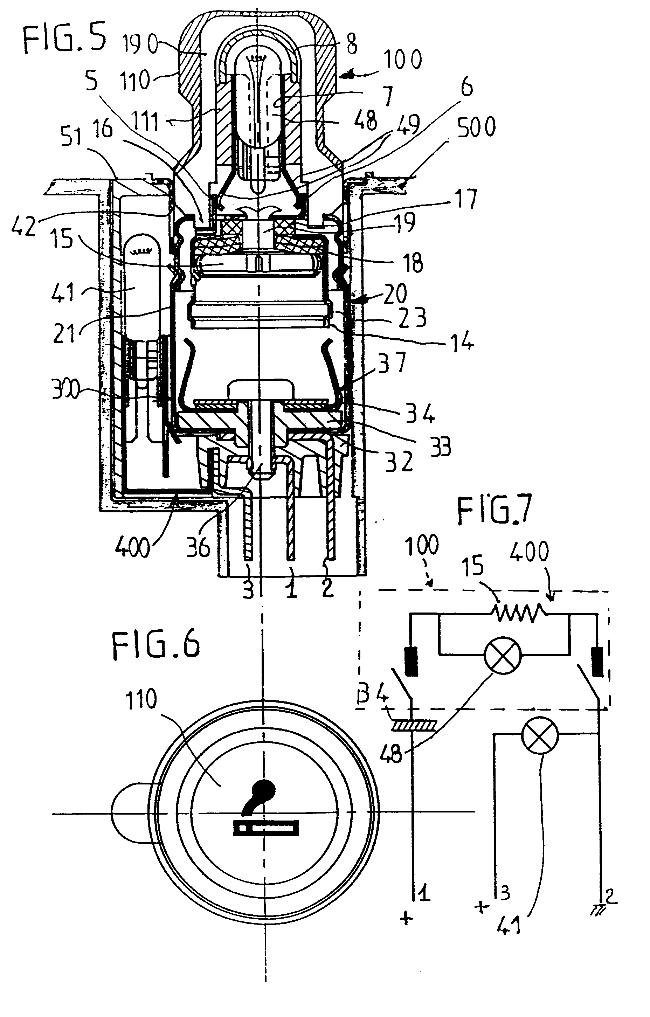

A la figure 1, la languette ou patte de la pièce 37 représentée à droite a été tournée de 90° pour une meilleure compréhension (comme à la figure 5).

Ainsi (figure 3) une partie du circuit 40 est portée par le bouchon 10 et une partie par le corps d'allumage 30 et c'est la raison pour laquelle on a représenté des interrupteurs aux figures 3 et 5, qui sont admis à se fermer lorsque le bouchon est en position active.

En position inactive, les deux languettes 21 sont propres à coopérer par accrochage élastique avec la gorge 22 la plus proche de l'extrémité libre de la cuvette 13, tandis qu'en position active, lorsque le bouchon est enfoncé, lesdites languettes sont propres à coopérer par accrochage élastique avec l'autre gorge.

On appréciera que le corps 30 est doté d'au moins une ouverture 42 au voisinage de son extrémité libre ouverte, pratiquée au niveau de l'excroissance 51.

Ainsi qu'on l'aura compris lorsque les lanternes du véhicule sont allumées, la lampe 41 est allumée et de la lumière est transmise par la lampe 41 au corps 9 conducteur de lumière à travers les ouvertures 42, avec illumination du sigle de l'allume-cigares (figure 2).

Lorsque l'on enfonce le bouchon 10 dans le corps 30, les languettes 21 sont admises à s'écarter, puis à tomber dans la seconde gorge 22 la plus proche du fond de la cuvette 13. Au cours de ce mouvement la zone de contact 23 de la cuvette 14 entre en contact avec les languettes de la pièce 37. Ce contact, ici pontuel, étant réalisé, la résistance chauffante 15 est admise à être chauffée, un circuit électrique s'établissant grâce à la languette 1, l'organe 36, la rondelle 35, le disjoncteur 34, la pièce 37, la cuvette 14, la résistance 15, l'organe 17, la cuvette 13, le corps d'allumage 30 et la languette 2.

Bien entendu, la position de la deuxième gorge 22 est déterminée aisément selon les applications afin qu'il y ait un contact entre les becs de la pièce 37 et la zone de contact 23 avantageusement étendue.

Ainsi on est sûr qu'un contact aura lieu en position active malgré les tolérances de fabrication et de la position des gorges 22, ainsi que des crochets des languettes 21.

On notera que lorsque le bouchon est enfoncé, qu'il y a possibilité d'illumination de la bague 12, grâce à l'ouverture 42 et au circuit 40, la lampe 41 étant alors plus proche de la bague 12.

L'illumination de la bague 12 est fonction de la résistance du disjoncteur 34, en sorte que lorsque la résistance de celui-ci augmente en fin de chauffage de la résistance 15, la bague 41 est illuminée différemment. L'usager constate la fin de l'allumage par baisse de l'illumination de la bague 12 et ce grâce à la résistance 43 et à la diode 44. En effet au début du chauffage, la lampe 41 fonctionne en pleine tension dépendant de la batterie (usuellement 12V), tandis qu'en fin de chauffage elle fonctionne ici en demi-tension (6V). La diode 44 et la résistance 43 empêchent un retour à la languette 3.

Lorsque les lanternes sont allumées et le bouchon 10 en position inactive, la lampe 41 fonctionne ici en demi-tension, tandis qu'en position active elle fonctionne au début en pleine tension, puis en fin de chauffage en demi-tension. Ainsi l'usager est toujours averti.

On appréciera que le disjoncteur 34 se réarme automatiquement lorsque l'on enlève le bouchon et qu'il est apte à reprendre après refroidissement sa faible résistance. En cas de court-circuit, par exemple par contact de la pièce 37 avec le corps 30, il disjoncte instantanément sous l'effet de la forte intensité, avec apparition d'un courant de fuite. C'est la raison pour laquelle la languette 1 est branchée sur l'antivol pour ne pas décharger la batterie lorsque le véhicule reste immobilisé. Il en est de même lorsque le bouchon reste enfoncé.

En variante, la languette 1 peut être branchée sur une centrale électrique d'alarme et de commande en sorte que l'alimentation de la languette 1 soit interrompue lorsque l'usager ferme les portes du véhicules.

Le disjoncteur 34 a donc deux fonctions et disjoncte en mode de chauffage sous l'effet de la chaleur par exemple vers 120°, la résistance 15 pouvant atteindre 900°. Tout cela dépend des applications et notamment de la distance entre les languettes de la pièce 37 (donc la zone 23) et la résistance 15. Lorsque l'on ote le bouchon, il y a réarmement du disjoncteur, qui reprend un état à faible résistance.

Pour plus de précisions, on se reportera à la courbe caractéristique (figure 17) du disjoncteur avec en ordonnée sa résistance (R) et en abscisse sa température (T).

Ainsi on tire parti des propriétés de surchauffes du disjoncteur. En cas de surchauffe la résistance augmente fortement, tandis que l'intensité devient négligeable.

On signalera que le maintien de la lampe 41 s'effectue à l'aide de pinces explicitées ci-après, en référence aux figures 5 à 12.

L'une des pinces est propre à venir en contact par une languette avec le fond 31 du corps 30, tandis que l'autre pince est reliée à la pièce 37, la diode 44 et la résistance 43 étant reliées à la languette 3, la sortie de la résistance 43 étant en contact avec la pince concernée.

Des moyens d'avertissement pour l'usager sont donc insérés dans le circuit électrique de l'allume-cigares en étant pilotés par le disjoncteur 34.

On notera que le montage et la fixation du corps 30 avec ses languettes 31 se fait par simple enfilage axial dans la planche 50, les trous 24 dudit corps étant adaptés à s'encliqueter avec des pattes non visibles prévues dans la planche de bord 50.

Dans les figures 5 à 12, le circuit électrique 400 est différent, le bouchon 100 comportant une partie opaque 110 et une partie creuse 190 en matériau translucide. Dans ces figures les éléments communs à ceux des figures 1 à 4 sont représentés par les mêmes chiffres.

L'alimentation de la lampe 41 se fait directement à partir de la languette 3, la diode et la résistance de la figure précédente étant éliminées.

Ainsi en position inactive, la fenêtre éclairante de la partie opaque 110 est illuminée grâce à la partie translucide 190 elle-même illuminée par la lampe 41, lorsque les lanternes du véhicule sont allumées.

En position active, une seconde lampe 48 est alimentée au début en pleine tension, puis après s'éteint en fin de chauffage donnant ainsi une indication par variation d'éclairage du bouchon. Cette seconde lampe 48 est montée dans le creux de la partie 190, qui porte pour ce faire deux parties 111 de support de pinces électriques d'alimentation 49 de la lampe 48, lesdites pinces étant dotées de languettes propres à venir en contact avec une languette axiale 5 issue par découpage de la cuvette 14 et une autre languette 6 issue par découpage de la cuvette 13. La lampe d'avertissement 48 est donc pilotée par le disjoncteur 34 implanté au niveau de la pièce 37.

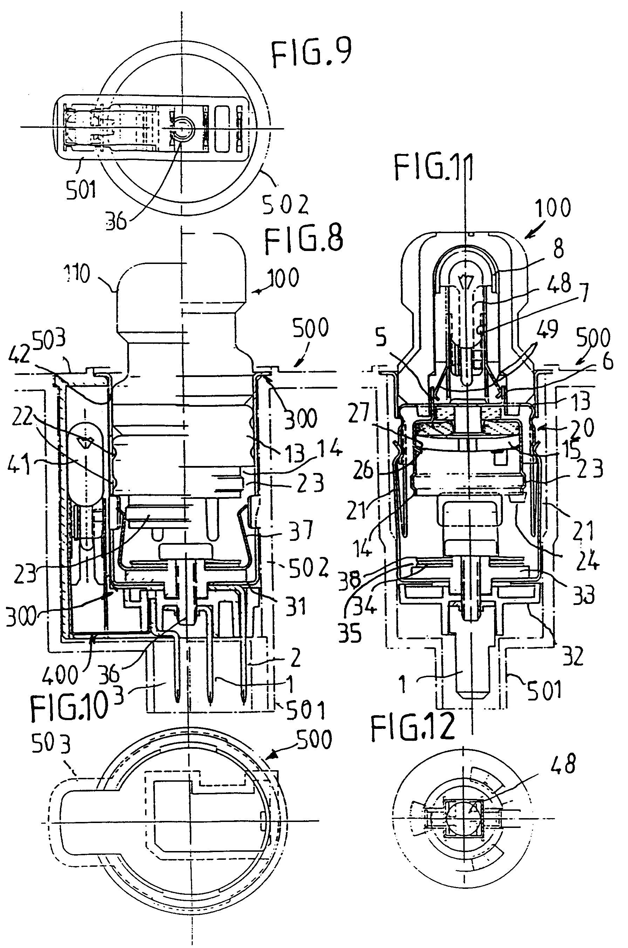

A la figure 9, on voit que la paroi 500 du véhicule possède une extrémité connectrice 501 et dans sa partie supérieure, une partie 503 pour réception de l'excroissance 51 renfermant la lampe 41.

On notera qu'une rondelle élastique du type Belleville 38 est interposée entre la tête de la vis 36 et la rondelle d'application 35 pour maintien élastique et serrage des pièces 37,34 et 35 les unes contre les autres. La charge de la rondelle élastique 38 dépend des applications, en sorte de créer un limiteur de pression évitant d'endommager le disjoncteur 34, en faisant fluer celui-ci lorsqu'il est à base de polymère semi-conducteur, ou en le cassant lorsqu'il est à base de céramique à coefficient de température positif. C'est la collerette de la pièce 33 qui permet le centrage isolant des pièces 34,35. Cette collerette est au contact avec la tête de la vis 36.

Le limiteur de pression peut avoir une autre forme et comporter par exemple une rondelle élastique ondulée interposée entre une rondelle au contact avec la tête de la vis 36 et le disjoncteur. On peut également utiliser une rondelle à lames élastiques ou pattes élastiques.

Un capuchon 8 on polycarbonate de couleur rouge entoure la partie supérieure de la lampe 48 pour éclairage du sigle d'allumage.

En variante (figures 13,14), la lampe d'éclairage 410 peut être portée par une bague 60 en matériau translucide conducteur de lumière et formant connecteur pour les languettes 1 à 3. Dans ce cas, le corps d'allumage 310 est assemblé par la vis 36 avec ladite bague 60, le montage se faisant par enfilage axial de la bague 60 avec le corps d'allumage dans un trou de la paroi du véhicule.

Ainsi qu'on l'aura compris, il est tiré parti de l'invention pour créer une prise de courant reprenant des éléments standards du bouchon d'allumage.

Ainsi dans les figures 15 et 16, la prise courant 200 présente une cuvette de contact électrique 14 avec une zone 23, pour contact ponctuel avec les languettes de la pièce 37, et une cuvette de guidage 13 avec des gorges 22 identiques à celles des figures précédentes. Cette prise est coudée et possède une partie 201 assemblée par montage à baïonnette 16 à la pièce 13, le montage s'effectuant comme à la figure 4.

Un organe de fixation 170 fixe la cuvette 14 à la partie 201 avec intervention de rondelles isolantes 180,190, l'une étant interposée entre le fond des deux cuvettes 13,14 et l'autre 180 entre le fond de la cuvette 14 et la tête du rivet de fixation 170. Le pied de ce rivet 170 sert au montage d'une lyre 204 de dénudage coudée, ainsi qu'à une autre lyre 205 coudée également portée par ladite pièce 201 de forme creuse. La lyre 204 est au contact du pied du rivet 170 par sa base, tandis que la lyre 205, par sa base, est au contact de la cuvette 13, une rondelle isolante 191 intervenant entre les deux lyres.

Cette pièce 201 est recouverte par un couvercle 202 assemblé à celle-ci par emboîtement et à l'aide d'une vis 203. Lors du montage, les fils 206,207 sont posés sur la partie 201 puis on procède à la fermeture par mise en place du couvercle 202. Au cours de cette mise en place, les fils 206,207 engagés sur l'extrémité libre fendue des lyres sont admis à être dénudés.

Ainsi qu'on l'aura compris en position active la prise 200 est admise à coopérer avec la pièce 37, tandis qu'en position inactive elle est à distance de la pièce 37. Cette prise se monte dans n'importe lequel des corps d'allumage des figures précédentes. Elle peut être dotée d'un dispositif d'éclairage comme précédemment.

Bien entendu la présente invention n'est pas limitée aux exemples de réalisation représentés. En particulier en ce qui concerne les moyens de retenue à gorges 22 et languettes 21, on peut inverser les structures. La cuvette 13 porte alors les languettes 21 dirigées vers le fond 31 du corps d'allumage, tandis que ledit corps d'allumage porte deux gorges échelonnées axialement. La gorge la plus éloignée du fond 31 sert à la retenue en position inactive de la fiche de courant, tandis que la gorge la plus proche du fond 31 sert à la retenue de la fiche de courant en position active comme c'est le cas du reste pour les gorges de la cuvette 13 illustrées dans la figure.

Bien entendu les languettes 21 peuvent être tournées dans l'autre sens, la gorge la plus proche du fond 31 du corps 30 servant à la retenue de la fiche de courant en position inactive, et la gorge la plus éloignée du fond 31 à la retenue de celle-ci en position active.

De même la pièce 37 peut consister en un véritable bilame. Pour cela il faut prévoir des ouvertures de dégagement dans la jupe du corps d'allumage pour que les lames du bilame puissent s'incurver.

On appréciera, que grâce à l'invention, le réglage des lames du bilame peut être moins précis.

La présence de telles ouvertures de dégagement est réalisée dans les figures illustrées pour des raisons de sécurité, l'une desdites ouvertures étant plus particulièrement à la figure 11.

On peut inverser la structure languettes de la pièce 37 - zone de contact cylindrique 23 de la pièce 14. La pièce 13 présente alors une zone bombée et les languettes présentent chacune une zone cylindrique de contact.

Bien entendu, les lampes décrites ci-dessus et/ou les bagues éclairantes constituent des dispositifs d'avertissement pour l'usager. En variante on pourrait prévoir également un dispositif sonore indiquant la fin du chauffage du corps 15 consécutivement à la variation de résistance du disjoncteur 34.

Dans tous les cas après chauffage, l'utilisateur peut extraire le bouchon.

Alors que la luminosité de la lampe 41 des figures 1 à 4 diminue lorsque la température du disjoncteur 34 augmente, on peut inverser le phénomène.

D'une manière générale, il suffit pour cela de monter le moyen d'avertissement 41 dans le circuit électrique de l'allume-cigares en parallèle par rapport au disjoncteur 34. Ainsi, dans le cas d'une lampe, celle-ci sera peu éclairée au début du chauffage du bouchon et fortement éclairée en fin de chauffage du bouchon. L'usager est ainsi bien averti.

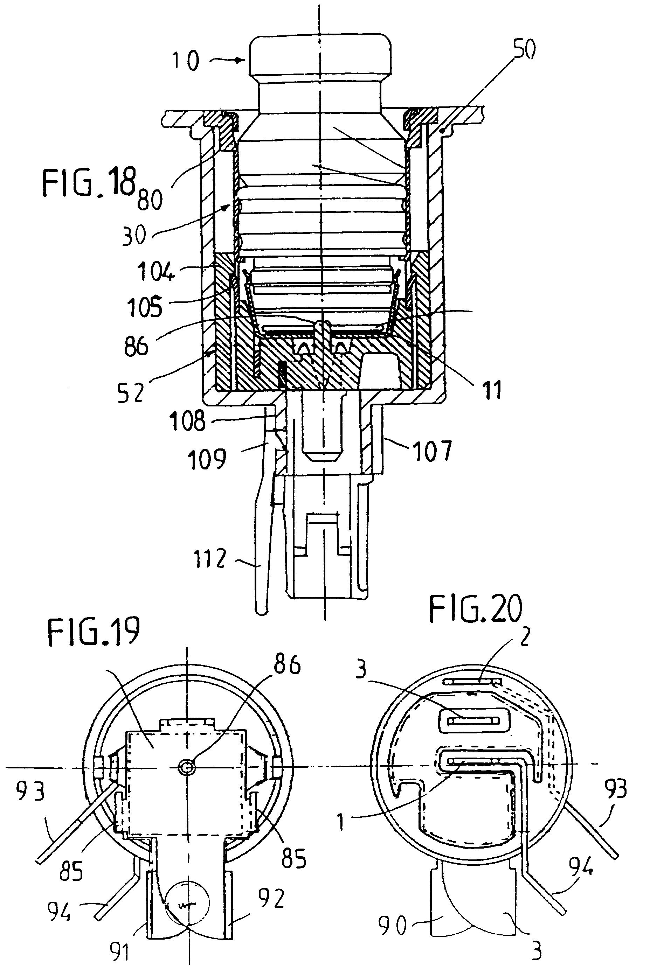

Une telle réalisation est illustrée dans les figures 18 à 23, dans lesquelles les éléments identiques à ceux de la figure 1 seront affectés les mêmes signes de références.

Ainsi, on voit en 10 le bouchon avec en 11 son chapeau opaque, en 30 le corps d'allumage, en 1,2,3 les languettes d'alimentation électriques en forme d'équerre s'étendant en saillie axialement à l'extrémité du corps 30, à partir du fond 31 de celui-ci, en 37 la pièce de contact électrique, en 34 le disjoncteur à coefficient de température positif et en 41 la lampe d'avertissement.

Le corps 30 est montée dans une cavité de la planche de bord 50 du véhicule conformée en connecteur. La paroi 50 comporte au niveau de son extrémité ouverte de logement du bouchon 10 deux tétons 83, tandis que le corps 30 est solidaire à son extrémité ouverte d'un plastron 80.

Ce plastron 80 est d'une part fixé par clipsage au corps 30 à l'aide de crans s'engageant dans des ouvertures pratiquées dans la jupe cylindrique du corps 30, et d'autre part, épaulé pour coopération avec un épaulement formée à l'extrémité ouverte de la paroi 50.

Le corps 30 est solidaire par clipsage d'un corps électriquement isolant 52 adossé au fond 31. Le corps 52 porte la pièce 37 à l'extérieur du corps 30. La pièce élastique 37, en forme de U, avec les lames pour contact par pincement avec la zone 23, à sa base prolongée par une barrette 90 qui s'étend parallèlement au fond 31 troué pour passage des lames de la pièce 37.

La languette de masse 2 est interposée axialement à fixation par sa base entre le corps isolant 52 et le fond 31 du corps 30, tandis que la languette 3, connectée aux lanternes, est fixée dans le corps 52 à la faveur d'une cheminée 82, que celui-ci présente à cet effet, et par l'intermédiaire de deux paires de pattes élastiquement déformables 85, que présente en vis-à-vis sa base en saillie axiale pour coopérer avec des crans 87 formés dans le corps 52 creusé pour cela.

La languette 1, connectée à l'antivol, est également montée dans le corps 52 à la faveur d'une cheminée, sa partie axiale étant dotée d'au moins un cran pour ancrage dans la cheminée.

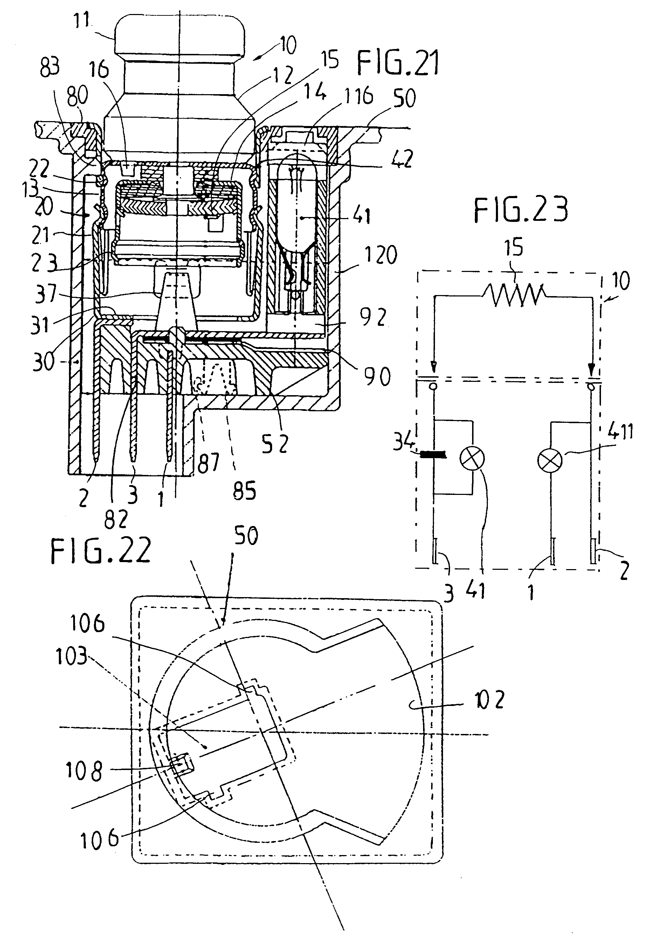

Ainsi, la languette 3 est fixée de manière stable dans le corps 52. Ce corps présente un téton 86 pour centrage de la base de la pièce 37 du disjoncteur 34 et de la base de la languette 3 troués à cet effet. Cette pièce 37 est en contact avec le corps 52, ainsi qu'avec le disjoncteur 34 interposé axialement entre la base de la languette 3 et la base de la pièce 37, le fond 31 du corps 1 étant percé pour passage des lames à becs de la pièce 37 (figure 21), immobilisée par coopération de formes avec le corps 52.

Ainsi qu'on l'aura compris, grâce à la languette 3 avec ces pattes 85 et son montage dans la cheminée 82, aucun organe de fixation n'est nécessaire pour le montage de la pièce élastique 37 et pour le montage du disjoncteur 34, lesdites pièces étant fixées par l'intermédiaire de la languette 3 en étant plaquées par celle-ci. Le corps isolant 52 sert donc à la fixation de la pièce 37 du disjoncteur 34 et des languettes 1 à 3.

A son extrémité libre, la barrette 90 de la pièce 37 présente un retour perpendiculaire 91, tout comme l'extrémité libre de la base de la languette 3, qui est prolongée et présente un retour perpendiculaire 92. Ces retours 91 et 92 s'étendent parallèlement au corps d'allumage 30 en étant montés ici en vis-à-vis. Ils permettent le montage et l'alimentation de la lampe d'avertissement 41. Cette lampe est montée, de manière connue en soi, dans une douille isolante servant de maintien à deux pièces conductrices en contact chacune à l'une de leurs extrémités avec l'un desdits retours 91 et 92 et, à l'autre de leurs extrémités, chacune avec le l'un des fils d'alimentation de la lampe, par l'intermédiaire d'une languette pinçant le culot de ladite lampe. Cette lampe 41 avec les retours 91,92 est montée dans une excroissance 120 de la paroi 50, latéralement et parallèlement par rapport au corps 30, ledit corps présentant des ouvertures 42 pour éclairage du bouchon. Le corps 52 présente à son extrémité opposée au fond de la paroi 50, des crochets 104 pour assemblage par clipsage avec le corps 30 présentant pour ce faire des languettes 105.

Ainsi, le montage du corps 30 dans la paroi 50 est réalisé par formation, d'abord d'un sous-ensemble 30, 80, 52, puis par enfilage de ce sous-ensemble dans la cavité délimitée par la paroi 50.

Pour ce faire on assemble d'abord le plastron 80 avec le corps 30, puis on monte par en-dessous le corps 52 équipé des pièces 1 à 3, 34 et 37, avec assemblage par clipsage.

Enfin, on monte par enfilage le tout dans la cavité de la paroi 50, dont les têton 83 viennent coopérer avec des ouvertures formées dans le corps 2 pour verrouillage de l'ensemble.

On notera que la languette 2 est conformée pour présenter également latéralement une languette 93 et il en est de même de la languette 1 qui présente latéralement une languette 94. Ces languettes sont dotées de retours perpendiculaires à l'image des retours 91, 92 et servent au montage par pincement d'une seconde lampe d'éclairage 411 ainsi qu'à son alimentamtion électrique.

Ainsi, le dispositif fonctionne de la manière suivante:
Lorsque l'usager allume les lanternes de son véhicule, la lampe 411 est alimentée et un circuit électrique s'établit entre les languettes 1 et 2 la lampe 411 éclairant la partie translucide 9 par l'intermédiaire des ouvertures 42, disposées au voisinage de l'extrémité ouverte du corps 30 et des lampes 41, 411.

La bague 12 n'est alors pas éclairée lorsque le bouchon 10 n'est pas enfoncé, c'est-à-dire en position inactive.

Lorsqu'on enfonce le bouchon (position active), les languettes 21 passent d'une gorge 22 à une autre et le bouchon, par sa cuvette 14 (la zone 23 de celle-ci), est admis à coopérer avec les lames de la pièce 37 et un circuit électrique s'établit à travers la languette 3, le disjoncteur thermique réarmable 34, la base de la pièce 37, les lames à becs de celles-ci, la pièce 14, le corps de chauffage 15, le rivet 17, la cuvette de guidage 13, le corps 30 et la languette 2.

La lampe 41 n'est pas éclairée au début de l'opération de chauffage car elle est montée en parallèle par rapport au disjoncteur 34 dans le circuit électrique de l'allume-cigares.

L'opération se poursuivant, la résistance du disjoncteur 34 augmente brusquement, conformément à la courbe de la figure 17, ce qui permet l'alimentation de la lampe 41 à pleine puissance grâce à la languette 3, à la pièce 37 et à leurs retours radiaux 91,92.

Ceci permet d'éclairer, à travers les ouvertures 42, la bague 12 qui est alors en position basse, la bague 12 prenant la couleur rouge, ce qui permet d'avertir le conducteur, qui n'a plus alors qu'à ôter le bouchon 10 pour allumer son cigare ou sa cigarette.

Ainsi qu'on l'aura compris, les deux lampes 41 et 411 sont montées côte-à-côte, parallèlement au corps 1, à la faveur de l'excroissance 120. La forme de la découpe 102 pratiquée pour ce faire dans la paroi 4 étant visible à la figure 22, ainsi que la découpe 103 pratiquée dans le fond de la cavité de la paroi 4 conformé en connecteur pour passage des languettes 1 à 3.

On notera la présence de deux encoches 106 dans la découpe 103 pour formation d'un détrompeur et coopération de formes avec des saillies 107 du corps 52. Une ouverture épaulée 108 est pratiquée dans la partie connectrice de la paroi 4 pour coopération avec une patte à crochet 109 (figure 18) du corps 52. La patte 109 est solidaire d'une saillie 112 (figure 18 pour son démontage). Le corps 52 est immobilisé axialement dans un sens par ladite patte 109 et dans l'autre sens par le fond de la paroi 50. Bien entendu, le plastron 80 est conformé pour obturer l'excroissance 120.

On appréciera que ce dispositif permet également, en cas de court-circuit, par exemple lorsque les lames de la pièce 37 viennent en contact avec le corps 30 malgré les ouvertures de dégagement 110, que celui-ci présente à cet effet, d'avertir l'usager.

Bien entendu, lorsque les lanternes ne sont pas allumées, le bouchon 10 n'est pas éclairé en permanence, et on peut également, en position inactive, éclairer la bague 12 par la lampe 411. en cas de court-circuit, même en position inactive, la bague 12 s'éclaire alors grâce à la lampe 41.

En cas de court-circuit par contact de la pièce 12 avec le corps 1, le disjoncteur 34 disjoncte instantanément sous l'effet de la forte intensité avec apparition d'un courant de fuite.

Avantageusement, la lampe d'avertissement 41 peut être coiffée par un capuchon 116 (figure 21) translucide de couleur, par exemple de couleur rouge, permettant de différencier les lampes 41 et 411. Dans ce cas, le bouchon 10 est simplifié, la bague 12 pouvant être supprimée.

Avantageusement, le plastron 80 opaque (figure 21) peut êre doté d'une fenêtre d'éclairage en regard des lampes 41,411 et le bouchon 10 être opaque en étant simplifié. Dans ce cas, que ce soit avec un bouchon chauffant ou avec une prise de courant, l'usager sera averti en cas de court-circuit, la lampe 41 éclairant alors la fenêtre du plastron, par exemple en rouge losque la lampe 41 est coiffée par un capuchon rouge.

Bien entendu, on peut choisir une autre composition pour le disjoncteur réarmable à coefficient de température positif, l'important étant que sa résistance change brusquement selon la courbe de la figure 10.

De même, alors qu'ici les lampes 41 et 411 sont à l'image l'une de l'autre, il est possible de les différencier.

Le disjoncteur 34 de la figure 1 peut être implanté entre le fond 31 et la base de la languette 32 en étant centré par le téton de la pièce 33. En variante, ce disjoncteur 34 implanté entre le fond 31 et la languette 32 peut être un disjoncteur supplémentaire.

Ainsi, deux disjoncteurs sont prévus, l'un implanté au niveau de la pièce 37 pour le fonctionnement normal, l'autre au niveau du fond 31 pour la sécurité.

En variante, on peut l'implanter dans la fiche de courant entre la tête de l'organe de fixation 17,170 et la cuvette 13 comme décrit dans le document FR 91 00501.

Dans tous les cas, le disjoncteur assure une protection contre les courts-circuits et disjoncte par chauffage lors du chauffage bouchon.

Enfin la pièce de prise de courant 14 (ou d'alimentation électrique) peut avoir une autre forme. Elle pourrait être de forme tronconique et venir coiffer la pièce élastique de contact 37, les becs de lames de celle-ci étant tournés vers l'extérieur. Dans ce cas les lames se resserrent.

## Revendications

1. Allume-cigares, notamment pour véhicule automobile du genre comportant, d'une part, une fiche de courant (10,100,200) et, d'autre part, pour réception de ladite fiche de courant, un corps creux d'allumage (30,300,310), formant prise de courant, pourvu d'une pièce élastique de contact électrique (37), de languettes d'alimentation électriques (1,2,3), dans lequel des moyens de retenue (20) interviennent entre ledit corps et ladite fiche, pour maintien de celle-ci en position inactive, lesdits moyens (20) étant portés en partie par une pièce de guidage (13), en matériau électriquement conducteur tout comme le corps d'allumage, appartenant à ladite fiche de courant, et en partie par ledit corps d'allumage, et dans le circuit électrique duquel est interposé un disjoncteur thermique réarmable (34) ayant un coefficient de température positif permanent avec une résistance augmentant avec la température, caractérisé en ce que les moyens de retenue (20) sont conformés pour retenir en position active la fiche de courant (10,100,200), et en ce que ladite fiche de courant (10,100,200) est dépourvue de partie mobile l'une par rapport à l'autre, ledit disjoncteur thermique réarmable (24) coupant l'alimentation de la fiche de courant (10,100,200) lorsque celle-ci comporte une résistance chauffante qui atteint la température désirée.

2. Allume-cigares selon la revendication 1, caractérisé en ce que le corps d'allumage (30,300,310) est dépourvu de bilame, sa pièce élastique de contact électrique (37) étant adaptée à venir ponctuellement en contact avec une zone de contact portée par la fiche de courant (10,100,200).

3. Allume-cigares selon la revendication 1 ou 2, caractérisé en ce que la fiche de courant comporte une pièce (14) d'alimentation électrique fixée à isolation électrique à ladite pièce de guidage (13) portant une partie des moyens de retenue (20).

4. Allume-cigares selon la revendication 3, caractérisé en ce que ladite pièce d'alimentation électrique (14) fait saillie axialement par rapport à la pièce de guidage (13).

5. Allume-cigares selon la revendication 3 ou 4, caractérisé en ce que la pièce de guidage (13) consiste en une cuvette de guidage entourant en partie la pièce d'alimentation électrique (14), et en ce que ladite pièce d'alimentation électrique (14) consiste également en une cuvette, qui comporte une zone cylindrique (23) pour contact local avec la pièce élastique de prise de courant (37) comportant pour ce faire des languettes à becs, ladite cuvette d'alimentation électrique (14) faisant saillie axialement par rapport à ladite cuvette de guidage (13).

6. Allume-cigares selon l'une quelconque des revendications 1 à 5, caractérisé en ce que les moyens de retenue (20) comportent des languettes d'accrochage (21) portées par l'un des éléments fiche de courant (10,100,200) - corps d'allumage (30,300,310) et deux gorges (22) échelonnées axialement portées par l'autre des éléments corps d'allumage (30,300,310) - fiche de courant (10,100,200).

7. Allume-cigares selon la revendication 6, caractérisé en ce que le corps d'allumage (30,300,310), doté du fond (31) et d'une extrémité ouverte, porte deux languettes d'accrochage (21) dirigées vers l'extrémité ouverte de celui-ci, tandis que la fiche de courant présente une cuvette de guidage avec deux gorges (22) échelonnées axialement.

8. Allume-cigares selon l'une quelconque des revendications précédentes, caractérisé en ce que des moyens d'avertissement pour l'usager sont insérés dans le circuit électrique d'alimentation de l'allume-cigares (40,400) en étant piloté par le disjoncteur thermique réarmable (34).

9. Allume-cigares selon la revendication 8, caractérisé en ce que lesdits moyens d'avertissement comportent au moins une lampe d'éclairage (41,48,410,41′), et en ce que la fiche de courant comporte une partie de préhension en matériau translucide propre à être éclairée par ladite lampe d'éclairage, dont l'éclairage varie en fonction de la résistance dudit disjoncteur (34).

10. Allume-cigares selon la revendication 8 ou 9, caractérisé en ce que les moyens d'avertissement sont montés en parallèle par rapport audit disjoncteur (34).

11. Allume-cirages selon la revendication 10, dans lequel l'une des languettes d'alimentation électrique (3) est en forme d'équerre avec une base parallèle au fond (31), que présente le corps d'allumage (30), et est reliée à l'une des bornes d'une source d'alimentation électrique et à ladite pièce élastique d'alimentation électrique (37) à travers ledit disjoncteur thermique (34), caractérisé en ce que, pour alimentation d'une lampe d'avertissement (41), la base de ladite languette d'alimentation (3) est prolongée par un retour perpendiculaire (92) s'étendant parallèlement au corps d'allumage (30).

12. Allume-cigares selon la revendication 11, dans lequel la pièce élastique d'alimentation électrique (37) a globalement la forme d'un "U" avec une base parallèle au fond (31) du corps d'allumage (30), caractérisé en ce que la base de ladite pièce (37) est prolongée par une barrette (90), qui s'étend parallèlement à la base de ladite languette d'alimentation électrique (3), ladite barrette (90) présentant à son extémité libre un retour perpendiculaire (91) s'étendant en vis-à-vis du retour (92) de ladite languette (3).

13. Allume-cigares selon la revendication 12, caractérisé en ce que le disjoncteur thermique réarmable (34) est interposé axialement entre les bases de ladite languette d'alimentation électrique (3) et de ladite pièce d'alimentation électrique (52) en étant porté par un corps isolant (32) solidaire du corps d'allumage (30), ledit corps isolant (52) présentant un téton de centrage (86) pour centrage dudit disjoncteur (11) et de la base de ladite base élastique d'alimentation (37).

14. Allume-cigares selon l'une quelconque des revendications 8 à 13, dans lequel la lampe d'avertissement (41) est montée latéralement et parallèlement par rapport au corps d'allumage dans une excroissance (100/120) d'une paroi (50) du véhicule, caractérisé en ce que une autre lampe (411) d'éclairage est montée dans ladite excroissance en étant alimentée par les lanternes du véhicule, et en ce que la lampe d'avertissement (10) est coiffée par un capuchon (116) en matière translucide de couleur pour différentiation des lampes d'éclairage (411) et d'avertissement (41).

15. Allume-cigares selon l'une quelconque des revendications précédentes, dans lequel la fiche consiste en un bouchon de chauffage (10,100), caractérisé en ce que ledit bouchon présente une cuvette conductrice (14) propre à coopérer avec la pièce élastique de contact électrique (37), et en ce que ladite cuvette (14) porte le corps de chauffage (15) et constitue un pare-cendres pour celui-ci.

## Claims

1. A cigar lighter, especially for motor vehicles, of the kind comprising, firstly, a current receiving element (10, 100, 200), and secondly, for receiving the said current receiving element, a hollow lighter body (30, 300, 310) constituting a current supply element and provided with a resilient electrical contact member (37) and electrical supply tongues (1, 2, 3), wherein retaining means (20) are interposed between the said body and the said receiving element for retaining the latter in an inactive position, the said means (20) being carried partly by a guide member (13), which, like the lighter body, is of an electrically conductive material and which is part of the said current receiving element, and in the electrical circuit of which there is interposed a rearmable thermal cut-out (34) having a permanent positive temperature coefficient with a resistance that increases with temperature, characterised in that the retaining means (20) are so configured as to hold the current receiving element (10, 100, 200) in its active position, and in that portions movable with respect to each other are absent from the said current receiving element (10, 100, 200), the said rearmable thermal cut-out (24) cutting the power supply of the current receiving element (10, 100, 200) when the latter has a heating resistance which reaches the desired temperature.

2. A cigar lighter according to Claim 1, characterised in that a bimetal strip is absent from the lighter body (30, 300, 310), the resilient electrical contact member (37) of the latter being adapted to make point contact with a contact zone carried by the current receiving element (10, 100, 200).

3. A cigar lighter according to Claim 1 or Claim 2, characterised in that the current receiving element includes an electrical supply member (14) which is fixed to, and insulated electrically from, the said guide member (13) carrying part of the retaining means (20).

4. A cigar lighter according to Claim 3, characterised in that the said electrical supply member (14) projects axially with respect to the guide member (13).

5. A cigar lighter according to Claim 3 or Claim 4, characterised in that the guide member (13) consists of a guide cup partly surrounding the electrical supply member (14), and in that the said electrical supply member (14) also consists of a cup, which comprises a cylindrical zone (23) for local contact with the resilient current supply member (37), which includes lipped tongues for this purpose, with the said electrical supply cup (14) projecting axially with respect to the said guide cup (13).

6. A cigar lighter according to any one of Claims 1 to 5, characterised in that the retaining means (20) comprise hooking tongues (21) carried by one of the elements consisting of the current receiving element (10, 100, 200) and the lighter body (30, 300, 310), and two grooves (22) which are in axial echelon and which are carried by the other one of the elements consisting of the lighter body (30, 300, 310) and the receiving element (10, 100, 200).

7. A cigar lighter according to Claim 6, characterised in that the lighter body (30, 300, 310), having a base (31) and an open end, carries two hooking tongues (21) which are directed towards the open end of the latter, while the current receiving element has a guide cup with two grooves (22) in axial echelon.

8. A cigar lighter according to any one of the preceding Claims, characterised in that display means for the user are inserted in the electrical power supply circuit for the cigar lighter (40, 400), being controlled by the rearmable thermal cut-out (34).

9. A cigar lighter according to Claim 8, characterised in that the said display means comprise at least one illuminating lamp (41, 48, 410, 41'), and in that the current receiving element includes a gripping portion of translucent material which is adapted to be illuminated by the said illuminating lamp, the illumination from which varies according to the resistance of the said cut-out (34).

10. A cigar lighter according to Claim 8 or Claim 9, characterised in that the display means are connected in parallel with respect to the said cut-out (34).

11. A cigar lighter according to Claim 10, in which one of the electrical supply tongues (3) is L-shaped with a base parallel to the base (31) of the lighter body (30), and is connected to one of the terminals of an electrical supply source and to the said resilient electrical supply member (37) through the said thermal cut-out (34), characterised in that, for the power supply of a display lamp (41), the base of the said supply tongue (3) is extended by a perpendicular flange (92) which extends parallel to the lighter body (30).

12. A cigar lighter according to Claim 11, in which the resilient electrical supply member (37) is generally U-shaped, with a base parallel to the base (31) of the lighter body (30), characterised in that the base of the said member (37) is extended by a strip element (90) which extends parallel to the base of the said electrical supply tongue (3), the said strip element (90) having at its free end a perpendicular flange (91) disposed in facing relationship with the flange (92) of the said tongue (3).

13. A cigar lighter according to Claim 12, characterised in that the rearmable thermal cut-out (34) is interposed axially between the base of the said electrical supply tongue (3) and the base of the said electrical supply member (52), being carried by an insulating body (32) fixed to the lighter body (30), the said insulating body (52) having a centring head (86) for centring the said cut-out (11) and the base of the said resilient supply base (37).

14. A cigar lighter according to any one of Claims 8 to 13, in which the display lamp (41) is mounted laterally and parallel with respect to the lighter body, in a housing-projecting from a wall (50) of the vehicle, characterised in that another illuminating lamp (411) is mounted in the said projecting element, being supplied with power by the lights of the vehicle, and in that the display lamp (10) is capped by a cover element (116) of translucent material, which is coloured to enable the illuminating lamp (411) and display lamp (41) to be differentiated from each other.

15. A cigar lighter according to any one of the preceding Claims, in which the receiving element consists of a heating plug (10, 100), characterised in that the said plug has a conductive cup (14) which is adapted to cooperate with the resilient electrical contact member (37), and in that the said cup (14) carries the heating body (15) and constitutes an ash guard for the latter.

## Patentansprüche

1. Zigarrenanzünder, insbesondere für Kraftfahrzeuge, der einerseits einen Stecker (10, 100, 200) und andererseits für die Aufnahme des besagten Steckers einen hohlen Anzündkörper (30, 300, 310) umfaßt, der eine Steckdose bildet und der mit einem elastischen elektrischen Kontaktstück (37) und mit Stromzuleitungszungen (1, 2, 3) versehen ist, bei welchem zwischen dem besagten Anzündkörper und dem besagten Stecker Haltemittel (20) zum Einsatz kommen, um diesen in inaktiver Position zu halten, wobei die besagten Haltemittel (20) teilweise an einem zu dem besagten Stecker gehörenden Führungsteil (13) aus elektrisch leitendem Material ebenso wie der Anzündkörper und teilweise an dem besagten Anzündkörper angebracht sind, und in dessen Stromkreis ein rückstellbarer thermischer Schutzschalter (34) mit einem ständigen positiven Temperaturkoeffizienten, dessen Widerstand sich mit steigender Temperatur erhöht, eingesetzt ist, **dadurch gekennzeichnet,** daß die Haltemittel (20) so gestaltet sind, daß sie den Stecker (10, 100, 200) in aktiver Position halten, und daß der besagte Stecker (10, 100, 200) ohne im Verhältnis zueinander beweglichen Teil ausgeführt ist, wobei der besagte rückstellbare thermische Schutzschalter (34) die Stromversorgung des Steckers (10, 100, 200) unterbricht, wenn dieser einen Heizwiderstand aufweist, der die gewünschte Temperatur erreicht.

2. Zigarrenanzünder nach Anspruch 1 , **dadurch gekennzeichnet,** daß der Anzündkörper (30, 300, 310) ohne Bimetallstreifen ausgeführt ist, wobei sein elastisches elektrisches Kontaktstück (37) punktuell mit einer Kontaktzone in Kontakt kommen kann, die am Stecker (10, 100, 200) angeordnet ist.

3. Zigarrenanzünder nach Anspruch 1 oder 2 , **dadurch gekennzeichnet,** daß der Stecker ein Stromzuleitungsteil (14) umfaßt, das mit elektrischer Isolierung an dem befesagten Führungsteil (13) befestigt ist, das einen Teil der Haltemittel (20) trägt.

4. Zigarrenanzünder nach Anspruch 3 , **dadurch gekennzeichnet,** daß das besagte Stromzuleitungsteil (14) axial vorspringend im Verhältnis zum Führungsteil (13) angeordnet ist.

5. Zigarrenanzünder nach Anspruch 3 oder 4 , **dadurch gekennzeichnet,** daß das Führungsteil (13) aus einer Führungsbuchse besteht, die das Stromzuleitungsteil (14) teilweise umgibt, und daß das Stromzuleitungsteil (14) ebenfalls aus einer Buchse besteht, die eine zylindrische Zone (23) für den örtlichen Kontakt mit dem elastischen elektrischen Kontaktstück (37) umfaßt, das dazu mit Nasen versehene Zungen aufweist, wobei die besagte Stromzuleitungsbuchse (14) axial vorspringend im Verhältnis zu der besagten Führungsbuchse (13) angeordnet ist.

6. Zigarrenanzünder nach einem der Ansprüche 1 bis 5, **dadurch gekennzeichnet,** daß die Haltemittel (20) Haltezungen (21) umfassen, die zu einem der Elemente Stecker (10, 100, 200) oder Anzündkörper (30, 300, 310) gehören, sowie zwei axial abgestufte Auskehlungen (22), die an dem jeweils anderen der besagten Elemente Anzündkörper (30, 300, 310) oder Stecker (10, 100, 200) angeordnet sind.

7. Zigarrenanzünder nach Anspruch 6 , **dadurch gekennzeichnet,** daß der mit dem Boden (31) und einem offenen Ende versehene Anzündkörper (30, 300, 310) zwei Haltezungen (21) trägt, die zu seinem offenen Ende gerichtet sind, während der Stecker eine Führungsbuchse mit zwei axial abgestuften Auskehlungen (22) aufweist.

8. Zigarrenanzünder nach einem der vorangehenden Ansprüche , **dadurch gekennzeichnet**, daß Anzeigemittel für den Benutzer in den Speisestromkreis des Zigarrenanzünders (40, 400) eingesetzt sind, die durch den rückstellbaren thermischen Schutzschalter (34) gesteuert werden.

9. Zigarrenanzünder nach Anspruch 8 , **dadurch gekennzeichnet**, daß die besagten Anzeigemittel wenigstens eine Beleuchtungslampe (41, 48, 410, 41') umfassen und daß der Stecker einen Griffteil aus lichtdurchlässigem Material umfaßt, der durch die besagte Beleuchtungslampe beleuchtet werden kann, deren Beleuchtung sich in Abhängkeit vom Widerstand des besagten Schutzschalters (34) verändert.

10. Zigarrenanzünder nach Anspruch 8 oder 9 , **dadurch gekennzeichnet,** daß die Anzeigemittel mit dem besagten Schutzschalter (34) parallelgeschaltet sind.

11. Zigarrenanzünder nach Anspruch 10, bei welchem eine der Stromzuleitungszungen (3) winkelförmig mit einer Grundfläche ausgeführt ist, die parallel zum Boden (31) verläuft, die der Anzündkörper (30) aufweist, und mit einer der Klemmen einer Stromversorgungsquelle und mit dem besagten elastischen elektrischen Kontaktstück (37) übor den besagten thermischen Schutzschalter (34) verbunden ist, **dadurch gekennzeichnet**, daß zur Stromversorgung einer Anzeigelampe (41) die Grundfläche der besagten Stromzuleitungszunge (3) durch einen senkrechten Rücksprung (92) verlängert wird, der sich parallel zum Anzündkörper (30) erstreckt.

12. Zigarrenanzünder nach Anspruch 11, bei welchem das elastische elektrische Kontaktstück (37) insgesamt die Form eines "U" mit einer Grundfläche besitzt, die parallel zum Boden (31) des Anzündkörpers (30) verläuft , **dadurch gekennzeichnet**, daß die Grundfläche des besagten Kontaktstücks (37) durch eine Leiste (90) verlängert wird, die sich parallel zur Grundfläche der besagten Stromzuleitungszunge (3) erstreckt, wobei die besagte Leiste (90) an ihrem freien Ende einen senkrechten Rücksprung (91) aufweist, der sich gegenüber dem Rücksprung (92) der besagten Zunge (3) erstreckt.

13. Zigarrenanzünder nach Anspruch 12 , **dadurch gekennzeichnet**, daß der rückstellbare thermische Schutzschalter (34) axial zwischen den Grundflächen der besagten Stromzuleitungszunge (3) und des besagten Stromzuleitungsteil (57) eingefügt und an einem fest mit dem Anzündkörper (30) verbundenen Isolierkörper (52) angebracht ist, wobei der besagte Isolierkörper (32) einen Zentrieransatz (86) für die Zentrierung des besagten Schutzschalters (34) und der Grundfläche des besagten elastischen elektrischen Kontaktstücks (37) aufweist.

14. Zigarrenanzünder nach einem der Ansprüche 8 bis 13, bei welchem die Anzeigelampe (41) seitlich und parallel im Verhältnis zum Anzündkörper in eine Ausstülpung (100/120) einer Wand (50) des Fahrzeugs eingebaut ist, **dadurch gekennzeichnet**, daß eine andere Beleuchtungslampe (411) in die besagte Ausstülpung eingebaut ist, wobei sie durch die Fahrzeugleuchten gespeist wird, und daß die Anzeigelampe (10) mit einer Abdeckung (116) aus lichtdurchlässigem farbigem Material versehen ist, um die Beleuchtungslampe (411) und die Anzeigealmpe (41) voneinander zu unterscheiden.

15. Zigarrenanzünder nach einem der vorangehenden Ansprüche, bei welchem der Stecker aus einem Heizeinsatz (10, 100) besteht , **dadurch gekennzeichnet**, daß der besagte Einsatz eine leitende Buchse (14) aufweist, die mit dem elastischen elektrischen Kontaktstück (37) zusammenwirken kann, und daß die besagte Buchse (14) das Heizelement (15) trägt und für dieses einen Aschenabstreifer bildet.
